(19) Europäisches Patentamt
European Patent Office
Office européen des brevets

(11) Veröffentlichungsnummer: **0 494 444 A1**

# (12) EUROPÄISCHE PATENTANMELDUNG

(21) Anmeldenummer: **91122157.0**

(22) Anmeldetag: **23.12.91**

(51) Int. Cl.⁵: **C02F 1/54**, C02F 1/56

(30) Priorität: **05.01.91 DE 4100203**

(43) Veröffentlichungstag der Anmeldung:
**15.07.92 Patentblatt 92/29**

(84) Benannte Vertragsstaaten:
**DE FR GB IT NL**

(71) Anmelder: **BAYER AG**

**W-5090 Leverkusen 1 Bayerwerk(DE)**

(72) Erfinder: **Wegner, Christian, Dr.**
**Miltzstrasse 13**
**W-5000 Köln 80(DE)**

(54) **Verfahren zur Abwasserreinigung.**

(57) Dispergierte, suspendierte und/oder gelöste Stoffe werden aus Wasser entfernt, indem man eine Carbonsäure zusetzt, die mit mindestens 2-wertigen Kationen schwerlösliche Niederschläge bilden kann und das entsprechende Carbonsäuresalz durch Zugabe eines mindestens 2-wertigen Kations ausfällt.

EP 0 494 444 A1

Die vorliegende Erfindung betrifft ein Verfahren zur Entfernung von suspendierten, dispergierten und/oder gelösten Stoffen aus Abwässern.

Die Reinigung von Abwässern gewinnt immer größere Bedeutung, z.B. weil Kläranlagen häufig keine Kapazitätsreserven mehr aufweisen und weil an Wasser, das in gereinigter Form Kläranlagen verläßt, immer höhere Reinheitsforderungen gestellt werden. Die Entfernung von in Wasser suspendierten organischen Phasen erfolgt im allgemeinen durch Flockungsmittel, die anorganischer oder organischer Natur sein können. Sie werden auch als Emulsionsspalter bezeichnet und bewirken eine Koagulation der organischen Phase, die dann mechanisch vom Wasser abgetrennt werden kann.

Bei den organischen Flockungsmitteln werden zumeist anionische oder kationische Polymere eingesetzt. Als organische anionische Flockungsmittel werden beispielsweise Copolymere auf der Basis von Acrylamid oder Acrylester mit (Meth-)Acrylsäure eingesetzt, die eine hohe Molmasse (Molgewicht z.B. über 800.000) und eine mittlere Inogenität (z.B. einen Gehalt an (Meth-)Acrylsäure von 30 - 50 Gew.-%) aufweisen.

Als organische kationische Flockungsmittel werden beispielsweise synthetische Polymere auf der Basis von Polyaminen, Polyiminen, Polyetherpolyaminen und quaternierten Polyamidaminen, ferner kationische Copolymere aus Acrylamid und unterschiedlichen Anteilen kationischer Monomere oder Oligomere und Homopolymerisate von Dimethyldiallylammoniumchlorid verwendet (siehe z.B. Kirk-Othmer, Encyclopedia of Chemical Technology, 3rd Ed., Vol., 10 S. 489 ff). Besonders bewährt haben sich organische kationische Emulsionsspalter auf der Basis von Polyamiden, Polyiminen, Polyetherpolyaminen und Polyamidaminen.

Als anorganische Emulsionsspalter werden i.a. Salze mehrwertiger Metalle verwendet, wie $AlCl_3$, $Al_2(SO_4)_3$, $Fe_2(SO_4)_3$, $CaCl_2$ und $CaO$. Diese werden zunächst in dem zu reinigenden Wasser gelöst und dann durch pH-Erhöhung als voluminöse Hydroxide ausgefällt. Diese adsorbieren im Wasser dispergierte, im allgemeinen organische Stoffe, Die Abtrennung der gefällten und adsorbierte Stoffe enthaltenden Hyrdoxide erfolgt zumeist durch Filtration.

Dieses Verfahren weist einen hohen Reinigungseffekt auf und wird in der Praxis oft angewendet. Nachteilig ist jedoch der Anfall der abgetrennten Stoffe zusammen mit großen Mengen anorganischen Materials und Wasser. Die abgetrennten Stoffe können deshalb nicht oder nur nach aufwendigen Vorbehandlungen entsorgt, z.B. verbrannt werden.

Die Spaltung mit synthetischen Polymeren ist oft nur effektiv, wenn die Verunreinigung im Wasser zumindestens mit einem Gehalt von einigen Prozent vorliegt. Die anorganischen Spalter sind in der Lage, z.B. dispergierte Ölphasen, die nur in wenigen ppm vorliegen zu beseitigen. Diese beiden Spalter werden deshalb in der Praxis oft nacheinander eingesetzt.

Anstelle von wasserlöslichen organischen Polymeren kann man als Flockungsmittel auch nichtionische, anionische und kationische Latices einsetzen (siehe US-A 3 485 752 und US-A 3 493 501). Diese Latices werden dem zu reinigenden Wasser zugesetzt, ohne anschließende Ausfällung. Sie zeigen einen gewissen Effekt bei der Flockung von Feststoffen. Ihre Fähigkeit zur Entfernung von in Wasser suspendierten Flüssigkeiten ist bei der heutzutage geforderten Reinheit eines geklärten Abwassers nicht ausreichend.

In der japanischen Offenlegungsschrift 50-41354 (= japanische Patentanmeldung 48-91588) werden Kombinationen von zwei organischen Fällungsmitteln beschrieben. Ein organisches makromolekulares Flockungsmittel wird in Kombination mit einem Kautschuk-Latex eingesetzt, der durch Zugabe von mindestens 2-wertigen Kationen ausgefällt wird, Bevorzugt wird dieses Verfahren zur Reinigung von den Abwässern eingesetzt, die bei der Herstellung dieser Kautschuk-Latices selbst anfallen. Im Vergleich zu den anorganisch/organischen Kombinationsverfahren hat dieses Verfahren den Vorteil, daß hier keine mit Ölen belasteten anorganischen und somit nicht verbrennbaren Abfälle anfallen. Nachteilig ist jedoch, daß zu dem zu entölenden Abwasser zwei Komponenten in abgestimmter Weise zu dosieren sind. Auch die Optimierung eines 2-Komponentensystems ist ungleich aufwendiger, zumal bei Abwässern, deren Zusammensetzung sich über die Zeit ändert und somit Neuadaptionen laufend erforderlich sind. Hinzu kommt, daß die beiden Komponenten nicht gemeinsam dosiert werden können, da die eingesetzten Kautschuk-Latices mit den kationischen Polymeren unverträglich sind.

Es besteht daher ein Bedarf nach einem Material, welches in der Lage ist, auch geringe Mengen von in Wasser suspendierten, dispergierten und/oder gelösten Stoffen zu adsorbieren und welches nach seiner mechanischen Abtrennung keine oder nur geringe unbrennbare Anteile enthält und somit leicht durch Verbrennung entsorgt werden kann.

Es wurde nun gefunden, daß in Wasser dispergierte, auspendierte und/oder gelöste Stoffe in einfacher Weise entfernt werden können, wenn man eine Carbonsäure zusetzt, die mit mindestens 2-wertigen Kationen schwerlösliche Niederschläge bilden kann das entsprechende Carbonsäuresalz durch Zugabe eines mindestens 2-wertigen Kations ausfällt. Die zuvor in Wasser dispergierten und/oder suspendierten flüssigen und/oder festen Teilchen werden damit von dem ausfallenden Carbonsäuresalz mitgerissen und können dann mechanisch, z.B. durch Filtration oder Zentrifugation, abgetrennt werden.

Es hat sich gezeigt, daß auch im Wasser gelöste Stoffe, insbesondere oberflächenaktive Substanzen mit diesem Verfahren aus dem Wasser entfernt werden können.

Als Carbonsäuren für das erfindunsggemäße Verfahren kommen alle Carbonsäuren in Betracht, die mit mindestens 2-wertigen Kationen in Wasser schwerlösliche Salze bilden. Die Carbonsäuren können monomer sein und eine oder mehrere, z.B. 1 bis 6 Carbonsäuregruppen pro Molekül aufweisen. Auch oligomere und polymere Carbonsäuren, welche Carbonylseitengruppen tragen, kommen infrage. Die Carbonsäuren können gegebenenfalls weitere funktionelle Gruppen aufweisen, z.B. ungesättigte Bindungen und/oder OH, SH, NH oder $NH_2$-Gruppen.

Von den monomeren und monofunktionelle Carbonsäuren können z.B. solche mit 8 - 24 C-Atomen eingesetzt werden, wobei die C-Atome geradkettig oder verzweigt angeordenet sein können Es können auch cyclische Carbonsäuren eingesetzt werden, Die Carbonsäuren können synthetischen oder natürlichen Ursprungs sein.

Beispiele für solche Säuren sind: Octansäure, 2-Ethylhexancarbonsäure, Dodecansäure, Tetradecansäure, Hexadecansäure und Octadecansäure und Versatosäure. Als Beispiele für natürliche Monocarbonsäuren, die im erfindungsgemäßen Verfahren eingesetzt werden können, seien genannt: Kokossäure, Ölsäure, Tallölfettsäure, Palmitinsäure, Stearinsäure, Behensäure, Leinölfettsäure, Rizinolsäure, Naphtensäure und Abietinsäure.

Beispiele für monomere Carbonsäuren mit mehreren Carboxylgruppen sind: Dodecandicarbonsäure, Adipinsäure, Korksäure, Acelainsäure, Trimethylhexancarbonsäure, Sebacinsäure und Alkenylbernsteinsäuren, die beispielsweise eine gerade oder verzweigte Alkenylkette mit 4 bis 40 C-Atomen enthalten können.

Bei den polymeren Carbonsäuren handelt es sich vorzugsweise um Polymerisate, die durch Copolymerisation einer eine Vinylgruppe enthaltenden Carbonäure mit anderen, bevorzugt unpolaren, Vinylmonomeren erhalten werden können. Bevorzugte unpolare Vinylmonomeren sind dabei $\alpha$-Olefine, beispielsweise 1-Octadecen, Styrol, Isobutylen, Diisobutylen, Ethylen und Methylvinylether. Bevorzugt als polymere Polycarbonsäuren sind Copolymerisate von Maleinsäure und/oder Maleinsäureanhydrid mit Acrylsäure und/oder Methacrylsäure.

Auch Gemische verschiedener Cabonsäuren können eingesetzt werden.

Das mindestens zweiwertige Kation wird im allgemeinen in Form eines wasserlöslichen anorganischen Salzes zugegeben. Beispielsweise seien genannt: Magnesiumchlorid, Magnesiumsulfat, Kalziumchlorid, Zinkchlorid, Eisen(II)-sulfat, Eisen(II)-chlorid, Aluminiumsulfat und Polyaluminiumchlorid. Eisen-, Magnesium-, Calcium-und Aluminiumsalze eignen sich besonders gut. Vorzugsweise werden diese Salze in Form einer wäßrigen Lösung eingesetzt.

Das erfindungsgemäße Verfahren ist geeignet, die verschiedensten in Wasser dispergierten Stoffe zu entfernen. Es kann sich hierbei z.B. um fein dispergierte Feststoffe, z.B. um Tone, Cellulosefasern, Pigmente, Kohleteile und andere feinteilige dispergierte Stoffe handeln, aber auch um mit Wasser nicht mischbare Flüssigkeiten, z.B. um aromatische, aliphatische und araliphatische Kohlenwasserstoffe, natürliche Öle, Fette und Esterverbindungen, z.B. um Weichmacher. Auch in Wasser dispergierte Polyether, z.B. Polypropylenoxide, Tetrahydrofuranpolymerisate, polymerisierte $\alpha$-Olefinepoxide, polymerisierte Styrolexpoxide sowie mit Ethyloxid gebildete Mischpolymerisate können nach dem erfindungsgemäßen Verfahren aus Wasser entfernt werden. Auch in Wasser dispergierte oder gelöste Emulgatoren anionischer, kationischer oder neutraler Natur, z.B. ethoxylierte Nonylphenole, sind nach dem erfindungsgemäßen Verfahren aus Wasser entfernbar. Auch Gemische aus den vorgenannten Stoffen können entfernt werden. Besonders geeignet ist das erfindungsgemäße Verfahren für die Aufarbeitung von Prozeßflüssigkeiten, wie sie z.B. in der Metallindustrie als Kühlschmierstoffemulsion, Walzöl, Polieröl und zur Blechentfettung eingesetzt werden und bei der Reinigung von Abwässern aus Lackierereien und Färbereien.

In einigen Fällen ist es auch möglich, in Wasser lösliche Anteile zu adsorbieren, beispielsweise oberflächenaktive Substanzen.

Da das erfindungsgemäße Verfahren besonders geeignet ist, um geringe Anteile an in Wasser dispergierten, suspendierten und/oder gelösten Fremdstoffen zu entfernen, bevorzugt enthält das aufzuarbeitende Wasser weniger als 1 Gew.-% zu isolierende Fremdstoffe, ist es in der Praxis häufig empfehlenswert, hohe Anteile an Fremdstoffen zunächst nach einem bekannten Verfahren und dann noch vorhandene restliche Anteile mit dem erfindungsgemäßen Verfahren zu entfernen.

Bei der Wasserreinigung nach dem erfindungsgemäßen Verfahren kann man z.B. wie folgt vorgehen: Das mit dem oder den abzutrennenden Stoff(en) verunreinigte Wasser wird unter Rühren vorgelegt und die Carbonsäure langsam unter Rühren zugegeben. Die Carbonsäure kann auch in verdünnter Form zugesetzt werden. Es ist bevorzugt, sie als wäßrige Lösung ihres Alkali- und/oder Ammoniumsalzes einzusetzen. Dann wird eine wäßrige Lösung eines mindestens ein zweiwertiges Kation enthaltenden Salzes zugetropft.

Man rührt mindestens 15 Minuten nach und trennt dann die ausgefällten Flocken, welche den aus dem Wasser abgetrennten Stoff mitgerissen haben, durch Filtration, Flotation oder anderen mechanische Verfahren ab.

Das Gewichtverhältnis der eingesetzten Carbonsäure zu der Menge des zu entfernenden Stoffes kann beispielsweise 0,1 - 20, vorzugsweise 0,5 - 10 betragen. Die Menge des einzusetzenden, mindestens zweiwertigen Kations wird vorzugsweise so gewählt, daß die eingesetzte Carbonsäure vollständig ausfällt und ein Überschuß des das mindestens 2-wertige Kation enthaltenden Salzes vermieden wird.

Das erfindungsgemäße Verfahren kann auch in vielfältiger Weise variiert werden. So kann man beispielsweise die Reihenfolge des Zusatzes von Carbonsäure und mindestens ein zweiwertiges Kation enthaltendem Salz umgekehrt wie oben beschrieben oder auch simultan durchführen. Es ist auch möglich, das erfindungsgemäße Verfahren mit Verfahren des Standes der Technik zu kombinieren. Möglich ist z.B. eine Kombination mit Verfahren, bei denen andere mit mindestens zweiwertigen Kationen fällbare Stoffe eingesetzt werden.

Das erfindungsgemäße Verfahren kann bei den unterschiedlichsten Temperaturen durchgeführt werden, beispielsweise bei Temperaturen zwischen 0 und 100 °C. Bevorzugt sind Temperaturen im Bereich von 20 bis 80 °C.

Mit dem erfindungsgemäßen Verfahren ist es möglich, Wasser, das durch suspendierte Feststoffe, dispergierte Flüssigkeiten oder gelöste, insbesondere oberflächenaktive Stoffe verunreinigt ist, so zu reinigen, daß es vollständig klar wird. Es kann direkt, ohne weitere Klärstufen zu durchlaufen, abgelassen werden. Nach dem Stand der Technik ist dies bislang nur bei Verwendung von anorganischen Flokkulationsmitteln möglich. Diese müssen jedoch in größerer Menge eingesetzt werden und bereiten nach ihrer mechanischen Abtrennung Probleme, da hierbei ein Schlamm anfällt, der einerseits aufgrund seines hohen Anteils an gebundenem Wasser und nichtbrennbarer anorganischer Masse nur schwer zu verbrennen ist, andererseits aufgrund seines Anteils an adsorbiertem Öl als Sondermüll deponiert werden muß.

Das erfindungsgemäße Verfahren hat dagegen den Vorteil, daß hierbei nur geringe Mengen ausgefällter Produkte anfallen, die aufgrund ihres hohen Anteils an organischer Substanz problemlos verbrannt werden können.

Die folgenden Beispiele erläutern das erfindungsgemäße Verfahren, ohne sie dadurch einzuschränken. Die Prozentangaben sind, soweit nichts anderes angegeben ist, Gewichtsprozente.

Beispiele

Eingesetzte Carbonsäuren

1.1. Monocarbonsäuren

A: Dodecansäure
B: Ölsäure
C: Leinölfettsäure
D: Tallölfettsäure
E: Technisches $C_{14}$-$C_{20}$ Fettsäuregemisch

1.2. Oligocarbonsäuren

A: Dodecandisäure
B: Dimerfettsäure
C: Trimerfettsäure
D: Alkenylbernsteinsäure

1.3. Polycarbonsäuren

A: Maleinsäureanhydrid/Ethylen-Copolymerisat, Molekulargewicht 25.000,
B: Maleinsäureanhydrid/Ethylen-Copolymerisat. Molekulargewicht 100.000,
C: Maleinsäureanhydrid/Ethylen-Copolymerisat, Molekulargewicht 8.000,
D: Acrylsäurehomopolymerisat Molekulargewicht 20.000,
E: Comonomeres aus Maleinsäureanhydrid und Octadecen,
F: Comonomeres aus Maleinsäureanhydrid und Methylvinylether,
G: Comonomeres aus Styrol und Maleinsäureanhydrid.

Beispiel 1

Reinigung einer wasserbasischen Kühlschmierstoffemulsion

500 ml einer Kühlschmierstoffemulsion, die bei der Metallverarbeitung verwendet wurde, wurden auf 50°C erhitzt und 10 ml einer Lösung zugetropft, die 10 % des Natriumsalzes der jeweils eingegebenen Carbonsäure enthielt. Anschließend wurde 5 ml einer 40 %igen Calciumchlorid-Lösung zugetropft. Es wurde eine halbe Stunde nachgerührt und anschließend über ein feines Drahtfilter abfiltriert.

Bei allen 3 eingesetzten Carbonsäuren wurde eine klare wässrige Phase erhalten, während die Kühlschmierstoffemulsion vor der Aufarbeitung eine milchig-trübe Emulsion darstellte. Es wurden folgende Abwasserwerte ermittelt:

| Carbonsäure | Gesamtextrahierbare organische Substanz (mg/l) | Restkohlenwasserstoff nach DIN 38 409 (mg/l) | CSB (mg/l) |
|---|---|---|---|
| Blindwert | 775 | 130 | 3670 |
| 1.1.A | 52 | < 1 | 1053 |
| 1.2.D | 80 | < 1 | 1200 |
| 1.3.B | 124 | < 1 | 1150 |

Beispiel 2

Reinigung einer wasserbasischen Kühlschmierstoffemulsion

Eine Kühlschmierstoffemulsion, die bei der spanabhebenden Metallverformung eingesetzt wurde, wurde mit Polymeren gemäß dem Stand der Technik vorgespalten. Nach der Spaltung erhielt man eine leicht trübe Lösung mit einem Restkohlenwasserstoffgehalt von 180 mg/l (nach DIN 38 409). Dieses Wasser wurde der in Beispiel 1 beschriebenen Prozedur unterworfen.

Man erhielt folgende Abwasserwerte:

| Carbonsäure | Restkohlenwasserstoff nach DIN 38 409 |
|---|---|
| Blindwert | 180 |
| 1.1.C | < 1 |
| 1.1.E | < 1 |
| 1.3.A | 5 |
| 1.3.B | < 1 |
| 1.3.C | 4 |
| 1.3.E | < 1 |
| 1.3.F | < 1 |
| 1.3.G | < 1 |

Beispiel 3

Reinigung eines Entfettungsbades

Es wurde verfahren wie in Beispiel 1 angegeben, wobei folgende Abwasserwerte erhalten wurden:

| Carbonsäure | Gesamtextrahierbare organische Substanz (mg/l) | Restkohlenwasserstoff nach DIN 38 409 (mg/l) | CSB (mg/l) |
|---|---|---|---|
| Blindwert | 68 | 60 | 1635 |
| 1.1.E | < 1 | < 1 | 344 |
| 1.2.D | 28 | 6 | 1270 |
| 1.3.B | < 1 | < 1 | 156 |
| 1.3.G | < 1 | < 1 | 215 |

Beispiel 4

Reinigung eines mit einem Polyether verunreinigten Wassers

Ein Wasser, welches 1000 ppm eines auf Propylenglykol gestarteten Polyethers, bestehend aus 87 % Propylenoxid und 13 % Ethylenoxid, enthielt, wurde, wie in Beispiel 1 angegeben, behandelt, wobei folgende Abwasserwerte erhalten wurden:

| Carbonsäure | CSB (mg/l) |
|---|---|
| Blindwert | 2.523 |
| 1.1.A | 248 |
| 1.1.B | 619 |
| 1.1.D | 252 |
| 1.2.C | 552 |
| 1.3.C | 101 |
| 1.3.E | 207 |
| 1.3.F | 221 |
| 1.3.G | 162 |

Beispiel 5

Reinigung eines mit Tensiden verunreinigten Wassers

Ein Wasser, welches a) einmal 1000 ppm eines Nonylphenols mit 10 Ethylenoxid-Einheiten und b) einmal 1000 ppm eines Nonylphenols mit 4 Ethylenoxid-Einheiten enthielt, wurde wie in Beispiel 1 angegeben behandelt, wobei folgende Abwasserwerte erhalten wurden:

| Carbonsäure | Wasser b) CSB (mg/l) | Wasser a) CSB (mg/l |
|---|---|---|
| Blindwert | 2.523 | 2.307 |
| 1.1.E | 197 | n.b. |
| 1.2.D | 423 | 730 |
| 1.3.A | 139 | n.b. |
| 1.3.E | 176 | 290 |
| 1.3.G | 145 | n.b. |
| n.b. = nicht bestimmt | | |

Beispiel 6

Reinigung eines mit einem natürlichen Öl verunreinigten Wassers

Ein Wasser, welches 1000 ppm Sojaöl enthielt, wurde wie in Beispiel 1 angegeben behandelt, wobei folgende Abwasserwerte erhalten wurden:

6

| Carbonsäure | CSB (mg/l) |
|---|---|
| Blindwert | 3.287 |
| 1.1.C | 248 |
| 1.1.E | 209 |
| 1.2.C | 74 |
| 1.3.A | 131 |
| 1.3.G | 160 |

## Beispiel 7

Reinigung eines Färbereiabwassers

Ein Färbereiabwasser, welches durch einen Dispersionsfarbstoff, der zur Färbung von Synthesefasern eingesetzt wurde, noch leicht rot gefärbt war, wurde wie in Beispiel 1 angegeben behandelt, wobei die Carbonsäuren 1.2.D und 1.1.E eingesetzt wurden. Man erhielt eine nahezu farblose Lösung. Die ausgefallenen Calciumsalze setzten sich am Boden als Flocken ab, die durch den adsorbierten Dispersionsfarbstoff rot gefärbt waren.

## Beispiel 8

Reinigung eines mit fein dispergiertem Ton verunreinigten Wassers

Ein Wasser, daß pro Liter 1 g Bentonit in fein susspendierter Form enthielt, wurde wie in Beispiel 1 beschrieben behandelt. Mit den Carbonsäuren 1.1.B, 1.2.A, 1.3.B und 1.3.G wurde jeweils eine klare Bentonit-freie Wasserphase erhalten.

## Beispiel 9

Reinigung eines Abwassers aus der Panierfabrikation

Ein Abwasser aus einer Papierfabrik, das durch Huminsäuren dunkelbraun gefärbt war, wurde wie in Beispiel 1 beschrieben behandelt. Man erhielt ein Abwasser, das nicht mehr dunkelbraun, sondern nur noch gelb - dunkelgelb gefärbt war. Es wurden folgende Extinktionswerte in einem Photometer bei 480 $\mu$m gemessen:

| Carbonsäure | Extinktion |
|---|---|
| Blindwert | 1,644 |
| 1.1.E | 0,457 |
| 1.2.D | 0,315 |
| 1.3.C | 0,791 |
| 1.3.E | 0,168 |

## Beipsiel 10

Reinigung von mit Tensiden verunreinigten Wässern

Analog Beispiel 1 wurden Wässer, die jeweils 1000 ppm der angegebenen, Ethoxylierungsprudukte von Nonylphenol oder Laurylalkohol enthielten, mit der Polycarbonsäure 1.3.E behandelt, wobei folgende Abwasserwerte enthalten wurden.

| Tensid | CSB (mg/l) |
|---|---|
| Blindwert | 2500 |
| Nonylphenol mit zehn Ethylenoxideinheiten | 225 |
| Nonylphenol mit zwanzig Ethylenoxideinheiten | 282 |
| Nonylphenol mit dreisig Ethylenoxideinheiten | 364 |
| Laurylalkohol mit sieben Ethylenoxideinheiten | 166 |

Beispiel 11

Reinigung von mit Tensiden verunreinigten Wässern

Es wurde verfahren wie in Beispiel 5 angegeben, als Tenside wurden jedoch verschiedene neutrale und anionische Typen eingesetzt. Die Reinigungswirkung wurde durch die Bestimmung des TOC- (Total Organic Carbon) Wertes ermittelt.

| Tensid | TOC (mg/l) | |
|---|---|---|
| | Blindwert | Probe |
| Sorbitanmonooleat | 784 | 36 |
| Styrylphenol mit 15 Ethylenoxideinheiten | 683 | 36 |
| Rizinusöl mit 3,5 Ethylenoxideinheiten | 981 | 62 |
| Stearylamin mit 2 Ethylenoxideinheiten | 618 | 24 |
| Dodecylbenzolsulfonat | 612 | 104 |
| $C_{15}$-Alkansulfonat | 508 | 40 |
| Laurylalkohol mit 3 Ethylenoxideinheiten und umgesetzt mit Chlorsulfonsäure | 505 | 37 |

**Patentansprüche**

1. Verfahren zur Entfernung von dispergierten, suspendierten und/oder gelösten Stoffen aus Wasser, dadurch gekennzeichnet, daß man eine Carbonsäure zusetzt, die mit mindestens 2-wertigen Kationen schwerlösliche Niederschläge bilden kann und das entsprechende Carbonsäuresalz durch Zugabe eines mindestens 2-wertigen Kations ausfällt.

2. Verfahren nach Anspruch 1, dadurch gekennzeichnet, daß man als Carbonsäure eine monomere Carbonsäure mit 8 bis 24 C-Atomen und 1 bis 6 Carbonsäuregruppen pro Molekül einsetzt.

3. Verfahren nach Anspruch 1, dadurch gekennzeichnet, daß man als Carbonsäure eine polymere Carbonsäure einsetzt, die durch Copolymerisation einer eine Vinylgruppe enthaltenden Carbonsäure mit einem anderen Vinylmonomeren erhalten wurde.

4. Verfahren nach Ansprüchen 1 bis 3, dadurch gekennzeichnet, daß man die Carbonsäure in Form einer wäßrigen Lösung ihres Alkali- und/oder Ammoniumsalzes einsetzt.

5. Verfahren nach Ansprüchen 1 bis 4, dadurch gekennzeichnet, daß man ein mindestens 2-wertiges Kation in Form eines wasserlöslichen anorganischen Salzes zugibt.

6. Verfahren nach Ansprüchen 1 bis 5, dadurch gekennzeichnet, daß man Eisen-, Magnesium-, Calcium- oder Aluminiumsalze zusetzt.

7. Verfahren nach Ansprüchen 1 bis 6, dadurch gekennzeichnet, daß man die Carbonsäure in der 0,1- bis 20-fachen Gewichtsmenge, bezogen auf den zu entfernenden Stoff, einsetzt.

8. Verfahren nach Ansprüchen 1 bis 7, dadurch gekennzeichnet, daß man es bei 0 bis 100°C durchführt.

9. Verfahren nach Ansprüchen 1 bis 8, dadurch gekennzeichnet, daß als gelöste Stoffe oberflächenaktive Substanzen entfernt werden.

10. Verfahren nach Ansprüchen 1 bis 9, dadurch gekennzeichnet, daß das Wasser, das dispergierte, suspendierte und/oder gelöste Stoffe gehält, weniger als 1 Gew.-% zu isolierende Fremdstoffe enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WORLD PATENTS INDEX<br>Week 7614,<br>Derwent Publications Ltd., London, GB;<br>AN 76-25397X<br>& JP-A-51 020 466 (TOHO CHEM. IND. LTD) 18.<br>Februar 1976 | 1,2,5,6,<br>9 | C02F1/54<br>C02F1/56 |
| A | * Zusammenfassung *<br>--- | 4 | |
| X | GB-A-1 159 819 (DOW CHEMICAL COMPANY)<br>* Seite 7; Ansprüche 1,2,8 *<br>* Seite 3, Zeile 100 - Zeile 107 *<br>--- | 1,3-6 | |
| X | DE-A-2 527 517 (KANO, MASATAKE ET AL.)<br>* Seite 18; Anspruch 1 *<br>* Seite 3, Zeile 4 - Seite 4, Zeile 3 *<br>--- | 1,3,5,6 | |
| X | US-A-3 276 998 (NALCO CHEMICAL COMPANY)<br>* Spalte 9; Anspruch 1 *<br>* Spalte 3, Zeile 51 - Spalte 6, Zeile 71 *<br>--- | 1,3,5,6 | |
| A | DE-A-2 527 987 (RALF F. PIEPHO ABWASSERTECHNIK GMBH)<br>* Seite 7; Anspruch 1 *<br><br>----- | 1,5,6 | **RECHERCHIERTE SACHGEBIETE (Int. Cl.5)**<br><br>C02F |

Der vorliegende Recherchenbericht wurde für alle Patentansprüche erstellt

| Recherchenort | Abschlußdatum der Recherche | Prüfer |
|---|---|---|
| DEN HAAG | 10 APRIL 1992 | TEPLY J. |